# EUROPÄISCHE PATENTANMELDUNG

(11) **EP 2 527 672 A1**
(43) Veröffentlichungstag der Anmeldung: **28.11.2012**
(21) Anmeldenummer: 12160244.5
(22) Anmeldetag: 20.03.2012
(51) Int. Cl.: F16C 19/52, H02K 7/08, H02K 5/173

(54) **Elektrodynamische Maschine mit einer dreipunktgelagerten Welle und Verwendung eines dritten Lagers zur unterstützenden Wellenlagerung**

(30) Priorität: 26.05.2011 DE 102011076524
(71) Anmelder: ZF Friedrichshafen AG, 88038 Friedrichshafen (DE)
(72) Erfinder: Wehlen, Timo, 88045 Friedrichshafen (DE); Ketteler, Karl-Hermann, 88677 Markdorf (DE); Scharr, Stephan, 88045 Friedrichshafen (DE)

(57) **Zusammenfassung**

Die elektrodynamische Maschine (1) hat eine drehbar gelagerte Welle (4), wobei zur Lagerung der Welle (4) zwei axial voneinander beabstandete Hauptlager (6, 7) vorgesehen sind. Es ist zusätzlich ein drittes Lager (8) vorgesehen, das zumindest zur Aufnahme von einer von der Welle (4) ausgehenden Radialkraft ausgelegt ist. Es ist eine Auslegung für eine Maximaldrehzahl der Welle (4) vorgesehen, wobei diese Maximaldrehzahl bei mindestens 50 % einer Anregungsdrehzahl einer ersten Biegeeigenschwingung der ausschließlich mittels der beiden Hauptlager (6, 7) gelagerten Welle (4) liegt.

## Beschreibung

Die Erfindung betrifft eine elektrodynamische Maschine mit einer drehbar gelagerten Welle sowie die Verwendung eines dritten Lagers zur unterstützenden und Drehzahl erhöhenden Lagerung einer mittels zweier Hauptlager gelagerten Welle.

Elektrodynamische Maschinen sind in verschiedenen Ausgestaltungen bekannt. Sie können beispielsweise als Elektromotoren oder auch als elektrische Generatoren ausgeführt sein. Diese Maschinen umfassen jeweils eine Welle, die üblicherweise mittels zweier Lager drehbar gelagert sind.

So wird beispielsweise in der DE 10 2007 057 034 A1 eine Handwerkzeugmaschine mit einem elektrischen Antriebsmotor und einer mittels zweier Lagerstellen gelagerten Welle beschrieben. Derartige Handwerkzeugmaschinen sind aufgrund ihrer räumlichen Ausgestaltung und auch ihres Einsatzzweckes nur für vergleichsweise niedrige Betriebsdrehzahlen der Welle ausgelegt. Insbesondere werden diese Maschinen deutlich unterhalb der Drehzahl betrieben, bei der die erste Biegeeigenschwingung der Welle angeregt wird.

In der DE 10 2005 035 834 A1 wird ein anderer Elektromotor mit einer drehbar gelagerten Welle beschrieben. Bei diesem Motor sind für die Welle drei Lagerstellen vorgesehen, wobei ein zwischen den beiden Hauptlagern angeordnetes Exzenterlager zur Verschleißreduzierung vorgesehen ist. Auch die Welle dieses elektrohydraulischen Aggregats wird nur bei vergleichsweise geringen Drehzahlen, die deutlich unterhalb des biegekritischen Bereichs liegen, betrieben.

Eine Aufgabe der Erfindung besteht darin, eine elektrodynamische Maschine der eingangs bezeichneten Art anzugeben, die bei einer hohen Drehzahl der Welle betrieben werden kann.

Zur Lösung dieser Aufgabe wird eine elektrodynamische Maschine entsprechend den Merkmalen des Patentanspruchs 1 angegeben. Bei der elektrodynamischen Maschine mit der drehbar gelagerten Welle sind zur Lagerung der Welle zwei axial voneinander beabstandete Hauptlager vorgesehen. Weiterhin ist zusätzlich ein drittes Lager vorgesehen, das zumindest zur Aufnahme von einer von der Welle ausgehenden Radialkraft ausgelegt ist. Dabei ist eine Auslegung für eine Maximaldrehzahl der Welle vorgesehen. Die Maximaldrehzahl liegt bei mindestens 50% einer Anregungsdrehzahl einer ersten Biegeeigenschwingung der ausschließlich mittels der beiden Hauptlager gelagerten Welle.

Bei der elektrodynamischen Maschine kann es sich insbesondere um einen elektrischen Motor oder um einen elektrischen Generator handeln. Die Welle umfasst eine Mittenlängsachse, die insbesondere auch die Drehachse der Welle ist. Die hier verwendeten Orientierungsangaben "axial" und "radial" beziehen sich auf diese Mittenlängsachse. Dabei bedeutet "axial" eine Orientierung parallel zur der Mittenlängsachse und "radial" eine Richtung senkrecht zur Mittenlängsachse. Die elektrodynamische Maschine umfasst insbesondere weitere Komponenten, wie zum Beispiel die eigentliche elektrodynamisch wirksame Aktiveinheit mit einem Stator und einem auf der Welle montierten Rotor, der zumindest während des Betriebs magnetisch mit dem Stator gekoppelt ist. Dabei ist die Aktiveinheit insbesondere zwischen den beiden Hauptlagern angeordnet.

Es wurde erkannt, dass sich aufgrund des Einsatzes des dritten Lagers die Maximaldrehzahl, mit der die Welle betrieben werden kann, erheblich erhöhen lässt. Dies ist insbesondere bei einer hochdrehenden, das heißt sehr schnell drehenden, elektrodynamischen Maschine von Bedeutung. Eine derartige Hochdrehzahlmaschine liegt insbesondere dann vor, wenn die Maximaldrehzahl bei mehr als 50% der Anregungsdrehzahl der ersten Biegeeigenschwingung liegt. Ergänzend oder alternativ kann die Ausgestaltung einer Hochdrehzahlmaschine auch in Bezug auf die Umfangsgeschwindigkeit der Welle definiert werden. Die Maximaldrehzahl der Welle, auf die die elektrodynamische Maschine ausgelegt ist, ist insbesondere so bemessen, dass in einem Bereich der Welle mit einem kleinsten Wellen-Außendurchmesser eine Außenumfangsfläche der Welle bei der Maximaldrehzahl der Welle eine Umfangsgeschwindigkeit von mindestens 100 m/s aufweist. Dabei gilt diese Geschwindigkeitsbedingung insbesondere für ein beliebiges Teilelement der Außenumfangsfläche der Welle in dem Bereich mit dem kleinsten Wellen-Außendurchmesser.

Aufgrund des dritten Lagers wird die unerwünschte Ausbildung der ersten Biegeeigenschwingung zumindest erschwert, jedenfalls in einen Bereich mit höherer Wellendrehzahl verschoben. Hierzu ist das dritte Lager so ausgelegt, dass es Radialkräfte aufnehmen kann, die von der Welle erzeugt werden, beispielsweise bei der Anregung der ersten Biegeeigenschwingung. Insbesondere aufgrund der Aufnahme dieser Radialkräfte durch das dritte Lager wird die angesprochene Unterdrückung der Biegeeigenschwingung oder Verschiebung hin zu deutlich höheren Anregungsdrehzahlen erreicht. Damit kann die Welle auch problemlos und insbesondere ohne Anregung der kritischen ersten Biegeneigenschwingung in einem hohen Drehzahlbereich betrieben werden, indem ohne das dritte unterstützende Lager, also bei ausschließlicher Lagerung mittels der beiden Hauptlager, bereits eine Anregung der ersten Biegeeigenschwingung erfolgt wäre oder zumindest mit hoher Wahrscheinlichkeit erfolgen hätte können.

Die Verwendung des dritten Lagers erlaubt also einen Betrieb der elektrodynamischen Maschine mit einer deutlich höheren Maximaldrehzahl der Welle. Das dritte Lager stellt eine dynamische Führung der Welle dar.

Vorteilhafte Ausgestaltungen der elektrodynamischen Maschine ergeben sich aus den Merkmalen der von Anspruch 1 abhängigen Ansprüche.

Günstig ist eine Ausgestaltung, bei der zwischen den beiden Hauptlagern ein axialer Hauptlagerabstand vorgesehen ist, und das dritte Lager zu einem der beiden Hauptlager einen axialen Nebenlagerabstand aufweist, der höchstens 50% des Hauptlagerabstandes beträgt. Mit einem Nebenlagerabstand, dessen Abmessung in dem genannten Bereich liegt, lassen sich sehr viele verschiedene Anwendungsfälle abdecken. Ein kurzer Nebenlagerabstand führt zu einer geringeren Gesamtbaulänge der elektrodynamischen Maschine, wohingegen ein längerer Nebenlagerabstand eine Auslegung auf eine geringere Radialkraftaufnahme und damit weniger massiv dimensionierte Komponenten gestattet.

Günstig ist eine weitere Ausgestaltung, bei der der Nebenlagerabstand 50% des Hauptlagerabstands beträgt. Dann ist das dritte Lager genau an der axialen Position angeordnet, an der bei einer ausschließlichen Zweipunktlagerung mittels der beiden Hauptlager bei angeregter erster Biegeeigenschwingung eine maximale radiale Auslenkung gegeben wäre. Dementsprechend eignet sich diese Position gut zur Anordnung des dritten Lagers. Hier treten dann verglichen mit anderen grundsätzlich ebenfalls denkbaren axialen Positionen für das dritte Lager niedrigere aufzunehmende Radialkräfte auf.

Gemäß einer weiteren günstigen Ausgestaltung beträgt der Nebenlagerabstand höchstens 40%, insbesondere höchstens 25%, und vorzugsweise höchstens 10% des Hauptlagerabstands. Je näher das dritte Lager an dem benachbarten Hauptlager angeordnet ist, umso kleiner kann die insgesamt resultierende Baulänge der elektrodynamischen Maschine ausfallen.

Günstig ist eine weitere Ausgestaltung, bei der der axiale Nebenlagerabstand des dritten Lagers zu einem der beiden Hauptlager im Bereich zwischen 25% und 75%, insbesondere zwischen 40% und 60%, und vorzugsweise zwischen 45% und 55% des Hauptlagerabstands zwischen den beiden Hauptlagern liegt. Unter dem Gesichtspunkt der Radialkraftaufnahme ist ein Nebenlagerabstand von 50% des Hauptlagerabstands eine Wendestelle. An dieser Position liegen die maximale Wellenauslenkung und damit die minimale Radialkraft vor. Zu beiden Seiten dieser Extremposition verändern sich die entsprechenden Werte gleichermaßen, so dass das dritte Lager sowohl bei einem größeren als auch bei einem kleineren Nebenlagerabstand als bei der herausgehobenen Position von 50% des Hauptlagerabstands angeordnet sein kann. Hier können die Positionen entsprechend den übrigen zu beachtenden Gegebenheiten der jeweiligen Ausgestaltung der elektrodynamischen Maschine gewählt werden.

Günstig ist eine weitere Ausgestaltung, bei der das dritte Lager auf einer Seite eines der beiden Hauptlager angeordnet ist, die von dem anderen der beiden Hauptlager abgewandt ist. Das dritte Lager befindet sich dann also insbesondere nicht zwischen den beiden Hauptlagern, sondern außerhalb des von den beiden Hauptlagern eingeschlossenen Bereichs. In diesem eingeschlossenen Bereich kann insbesondere eine andere Komponente der elektrodynamischen Maschine, wie zum Beispiel die elektrodynamisch wirksame Aktiveinheit mit dem Rotor und dem Stator, angeordnet sein, so dass keine Möglichkeit für die Platzierung des dritten Lagers besteht.

Günstig ist eine weitere Ausgestaltung, bei der das dritte Lager durch ein Planetengetriebe oder durch einen Planetensatz gebildet ist. Ein derartiges Planetengetriebe bzw. ein derartiger Planetensatz ist zum einen in der Lage, eine von der Welle verursachte Radialkraft aufzunehmen, und nimmt aber zum anderen das Drehmoment von der Welle radialkraftfrei ab, so dass die Welle im Wesentlichen nicht zusätzlich belastet wird. Insbesondere kommt es zu keiner nennenswerten Biegebelastung oder Unwuchtanregung der Welle durch ein als Planetengetriebe oder Planetensatz ausgebildetes drittes Lager.

Günstig ist es weiterhin, wenn die elektrodynamische Maschine als Traktionsantrieb ausgestaltet ist. Derartige Maschinen werden bei sehr stark variierenden Wellendrehzahlen betrieben. Insbesondere wird bei einem solchen Traktionsantrieb auch eine hohe Maximaldrehzahl gefordert. Letzteres lässt sich aufgrund der Verwendung des unterstützenden und die Drehzahl erhöhenden dritten Lagers erreichen.

Ein weiterer vorteilhafter Aspekt der Erfindung liegt in der besonderen Verwendung eines dritten Lagers zur unterstützenden und Drehzahl erhöhenden Lagerung einer Welle, die bereits mittels zweier Hauptlager gelagert ist. Durch das dritte Lager wird die Anregungsdrehzahl der ersten Biegeeigenschwingung der Welle erhöht, so dass die Welle insgesamt mit einer insbesondere sehr hohen Maximaldrehzahl zu betreiben ist. Diese Maximaldrehzahl beträgt mindestens 50% der Anregungsdrehzahl, bei der die erste Eigenschwingung der Welle angeregt wird. Diese Anregungsdrehzahl bezieht sich dabei nicht auf eine dreipunktgelagerte, sondern auf eine zweipunktgelagerte Welle, also auf eine Lagerung der Welle ausschließlich mittels der beiden Hauptlager. Bei dieser Verwendung des dritten Lagers ergeben sich die gleichen Eigenschaften und Vorteile, die vorstehend bereits für die elektrodynamische Maschine und deren Ausgestaltungen beschrieben worden sind. Ebenso sind für die Verwendung des dritten Lagers entsprechende Ausgestaltungen wie vorstehend für die elektrodynamische Maschine beschrieben möglich.

Weitere Merkmale, Vorteile und Einzelheiten der Erfindung ergeben sich aus der nachfolgenden Beschreibung von Ausführungsbeispielen anhand der Figuren der Zeichnung. Es zeigt:
- Fig. 1: ein Ausführungsbeispiel einer elektrodynamischen Maschine mit einer dreipunktgelagerten Welle, und
- Fig. 2: die Welle gemäß Fig. 1 bei einer Zweipunktlagerung im Ruhezustand und bei angeregter erster Biegeeigenschwingung jeweils in schematischer Darstellung.

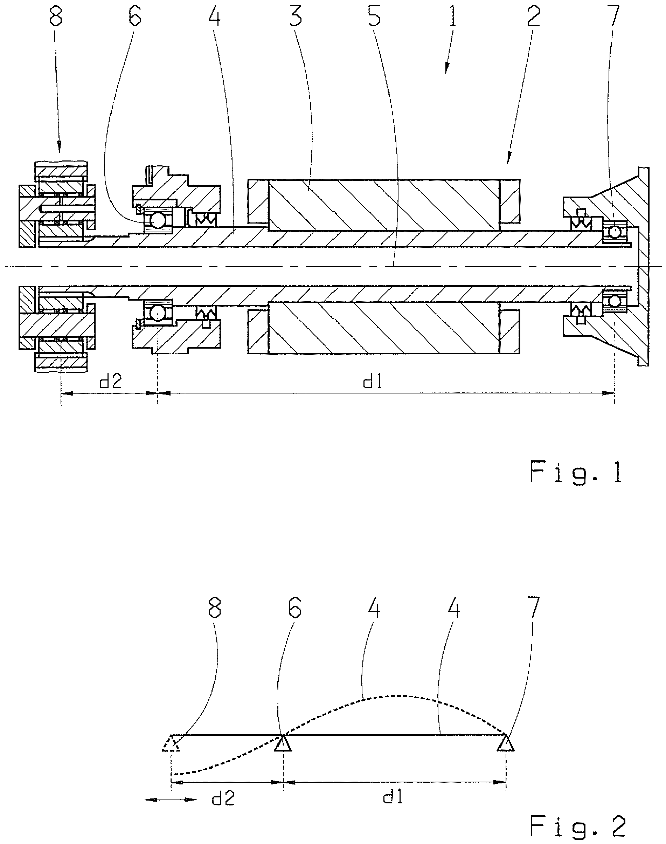

Einander entsprechende Teile sind in den Fig. 1 und 2 mit denselben Bezugszeichen versehen. Auch Einzelheiten der im Folgenden näher erläuterten Ausführungsbeispiele können für sich genommen eine Erfindung darstellen oder Teil eines Erfindungsgegenstandes sein.

In Fig. 1 ist ein Ausführungsbeispiel einer als elektrischer Motor ausgeführten elektrodynamischen Maschine 1 in einer Ausschnittsdarstellung abgebildet. Die elektrodynamische Maschine 1 umfasst eine Aktiveinheit 2, von der im gezeigten Ausschnitt im Wesentlichen nur der Rotor 3 wiedergegeben ist. Nicht gezeigt ist dagegen der Stator der Aktiveinheit 2. Der Rotor 3 und der nicht abgebildete Stator sind durch einen Luftspalt in der üblichen Weise getrennt und während des Betriebs magnetisch über den Luftspalt miteinander gekoppelt. Der Rotor 3 ist drehfest auf einer Welle 4 montiert, welche eine Mittenlängsachse 5 aufweist und drehbar um diese Mittenlängsachse 5 gelagert ist. Die Mittenlängsachse 5 ist also die Drehachse der Welle 4 und auch des elektrischen Motors. Bei dem in Fig. 1 gezeigten Ausführungsbeispiel ist die Welle 4 als Hohlwelle ausgeführt. Andere Ausgestaltungen, beispielsweise als Vollwelle, sind aber grundsätzlich ebenfalls möglich.

Zur Lagerung der Welle 4 sind zwei Hauptlager 6 und 7 vorgesehen, die zu beiden axialen Seiten der Aktiveinheit 2 angeordnet sind. Die Hauptlager 6 und 7 sind bei dem gezeigten Ausführungsbeispiel als Kugellager ausgebildet, wobei grundsätzlich auch andere Lagertypen, wie zum Beispiel Wälzlager in Form eines Zylinder-, Nadel-, oder Kegelrollenlagers oder auch Gleitlager, zum Einsatz kommen können.

Axial seitlich neben dem Hauptlager 6 ist ein Planetengetriebe 8 angeordnet, das zum einen zur Drehmomentabnahme von der Welle 4 und zum anderen auch zur zusätzlichen Abstützung der Welle 4 ausgelegt ist. Insgesamt ist also eine Dreipunktlagerung der Welle 4 vorgesehen. Die zwei Hauptlager 6 und 7 bilden die primären Lagerstellen, wohingegen das Planetengetriebe 8 eine unterstützende Lagerung und dynamische Führung der Welle 4 darstellt.

Die beiden Hauptlager 6 und 7 sind in einem Hauptlagerabstand d1 zueinander angeordnet. Das Planetengetriebe 8 ist axial durch einen Nebenlagerabstand d2 von dem Hauptlager 6 beabstandet und auf der von dem Hauptlager 7 abgewandten Seite des Hauptlagers 6 angeordnet.

Aufgrund des Planetengetriebes 8 kann die Maximaldrehzahl der elektrodynamischen Maschine 1 angehoben werden, ohne dass es dadurch zu der unerwünschten Anregung der ersten Biegeeigenfrequenz der Welle 4 kommt. Das Planetengetriebe 8 kann nämlich Radialkräfte, die von der Welle 4 hervorgerufen werden, aufnehmen und somit zur Dämpfung von Biegeeigenschwingungen beitragen.

Diese Wirkung wird im Folgenden anhand von Fig. 2 näher erläutert. In der schematischen Abbildung gemäß Fig. 2 ist die Welle 4 nur als Strich dargestellt. Auch die Hauptlager 6 und 7 sind ebenso wie das Planetengetriebe 8 nur schematisch als Lagerstellen angedeutet, wobei das Planetengetriebe 8 bei den folgenden Überlegungen gedanklich zunächst wegzulassen ist. Dementsprechend ist das Planetengetriebe 8 in der Abbildung gemäß Fig. 2 gestrichelt wiedergegeben. Die Welle 4 ist in ihrem Ruhezustand oder bei einer biegeunkritischen Drehzahl als durchgezogene gerade Linie abgebildet. Bei einer bestimmten Drehzahl, die auch als biegekritische Anregungsdrehzahl bezeichnet wird, wird die erste Biegeeigenschwingung der Welle 4 angeregt. Deren Auslenkungsprofil ist in Fig. 2 als im Wesentlichen sinusförmige gestrichelte Linie mit abgebildet. Man erkennt die Wirkung der Hauptlager 6 und 7 an der Fixierung in Bezug auf eine Radialauslenkung. Die radiale Position der Welle 4 wird aufgrund der Hauptlager 6 und 7 auch bei angeregter erster Eigenschwingung beibehalten. Dagegen würde an der Stelle, an der das Planetengetriebe 8 angeordnet ist, eine Radialauslenkung der Welle 4 vorliegen. Genau diese Auslenkung unterdrückt das Planetengetriebe 8, so dass es bei dieser Drehzahl eben noch nicht zu der unerwünschten Ausbildung der Biegeeigenschwingung kommt. Die Welle 4 kann also bei dieser Drehzahl, die ohne die zusätzliche Stütz- und Führungsfunktion durch das Planetengetriebe 8 zu einem kritischen Betriebszustand führen würde, noch ohne weiteres betrieben werden.

Die Größe der Radialauslenkung an der Position des Planetengetriebes 8 und auch die Stärke der durch das Planetengetriebe 8 aufzunehmenden Radialkräfte hängt von der axialen Position ab, an der das Planetengetriebe 8 angeordnet ist, also von dem Nebenlagerabstand d2. Bei der in der Abbildung gemäß Fig. 2 gezeigten Ausgestaltung ist das Planetengetriebe 8 genau im Maximum des Schwingungsbauchs der ersten Biegeeigenschwingung angeordnet. An dieser Stelle würde es also bei einer ausschließlichen Lagerung mittels der beiden Hauptlager 6 und 7 zu einer maximalen radialen Auslenkung kommen. Der Nebenlagerabstand d2 beträgt dann gerade die Hälfte des Hauptlagerabstands d1.

Grundsätzlich sind aber auch andere axiale Positionen für das Planetengetriebe 8 denkbar. Je näher das Planetengetriebe 8 an das Hauptlager 6 heranrückt, umso größer werden die vom Planetengetriebe 8 aufzunehmenden Radialkräfte. Andererseits sinkt dann die Baulänge der elektrodynamischen Maschine 1.

Die Verwendung des Planetengetriebes 8 führt also zu einer Erhöhung der Biegesteifigkeit der Welle 4 und damit zu einer Erhöhung der biegekritischen Anregungsdrehzahl für die erste Biegeeigenschwingung. Damit kann die Maximaldrehzahl der Welle 4 angehoben werden. Dies ist insbesondere bei Hochdrehzahlanwendungen, wie beispielsweise bei einem Traktionsantrieb, von Interesse.

### Bezugszeichen

- 1: elektrodynamische Maschine
- 2: Aktiveinheit
- 3: Rotor
- 4: Welle
- 5: Mittenlängsachse
- 6: Hauptlager
- 7: Hauptlager
- 8: Planetengetriebe

- d1: Hauptlagerabstand
- d2: Nebenlagerabstand

## Patentansprüche

1. Elektrodynamische Maschine mit einer drehbar gelagerten Welle (4), wobei
a) zur Lagerung der Welle (4) zwei axial voneinander beabstandete Hauptlager (6, 7) vorgesehen sind, und
b) zusätzlich ein drittes Lager (8) vorgesehen ist, das zumindest zur Aufnahme von einer von der Welle (4) ausgehenden Radialkraft ausgelegt ist, wobei
c) eine Auslegung für eine Maximaldrehzahl der Welle (4) vorgesehen ist, und die Maximaldrehzahl bei mindestens 50 % einer Anregungsdrehzahl einer ersten Biegeeigenschwingung der ausschließlich mittels der beiden Hauptlager (6, 7) gelagerten Welle (4) liegt.

2. Elektrodynamische Maschine nach Anspruch 1, bei der zwischen den beiden Hauptlagern (6, 7) ein axialer Hauptlagerabstand (d1) vorgesehen ist, und das dritte Lager (8) zu einem der beiden Hauptlager (6) einen axialen Nebenlagerabstand (d2) aufweist, der höchstens 50% des Hauptlagerabstands (d1) beträgt.

3. Elektrodynamische Maschine nach Anspruch 2, bei der der Nebenlagerabstand (d2) 50% des Hauptlagerabstands (d1) beträgt.

4. Elektrodynamische Maschine nach Anspruch 2, bei der der Nebenlagerabstand (d2) höchstens 40%, insbesondere höchstens 25 %, und vorzugsweise höchstens 10 % des Hauptlagerabstands (d1) beträgt.

5. Elektrodynamische Maschine nach einem der vorhergehenden Ansprüche, bei der zwischen den beiden Hauptlagern (6, 7) ein axialer Hauptlagerabstand (d1) vorgesehen ist, und das dritte Lager (8) zu einem der beiden Hauptlager (6, 7) einen axialen Nebenlagerabstand (d2) aufweist, der im Bereich zwischen 25 % und 75%, insbesondere zwischen 40 % und 60 %, und vorzugsweise zwischen 45 % und 55 % des Hauptlagerabstands (d1) liegt.

6. Elektrodynamische Maschine nach einem der vorhergehenden Ansprüche, bei der das dritte Lager (8) auf einer Seite eines der beiden Hauptlager (6) angeordnet ist, die von dem anderen der beiden Hauptlager (7) abgewandt ist.

7. Elektrodynamische Maschine nach einem der vorhergehenden Ansprüche, bei der das dritte Lager durch ein Planetengetriebe (8) gebildet ist.

8. Elektrodynamische Maschine nach einem der vorhergehenden Ansprüche, bei der eine Ausgestaltung als Traktionsantrieb vorgesehen ist.

9. Verwendung eines dritten Lagers (8) zur unterstützenden und Drehzahl erhöhenden Lagerung einer mittels zweier Hauptlager (6, 7) gelagerten Welle (4), wobei durch das dritte Lager (8) eine Anregungsdrehzahl einer ersten Biegeeigenschwingung der Welle (4) erhöht wird, so dass die Welle (4) mit einer Maximaldrehzahl betreibbar ist, die mindestens 50 % der Anregungsdrehzahl beträgt, bei der die erste Biegeeigenschwingung der ausschließlich mittels der beiden Hauptlager (6, 7) gelagerten Welle (4) angeregt wird.
